# EUROPEAN PATENT APPLICATION

(11) **EP 1 298 912 A2**
(43) Date of publication of application: **02.04.2003**
(21) Application number: 02021791.5
(22) Date of filing: 26.09.2002
(51) Int. Cl.: H04N 1/21, H04N 1/00, H04N 101/00

(54) **Method and apparatus for image recording, method and apparatus for image distribution, and programs thereof**

(30) Priority: 27.09.2001 JP 2001298189
(71) Applicant: FUJI PHOTO FILM CO., LTD., Kanagawa 250-01 (JP)
(72) Inventor: Tsue, Takashi, Fuji Photo Film Co., Ltd., Ashigarakami-gun, Kanagawa-ken (JP)
(74) Representative: Klunker . Schmitt-Nilson . Hirsch

(57) **Abstract**

An image representing people as a subject can be easily distributed to the people. Photography is carried out by using a digital camera 2, and image data S0 representing the subject image are recorded in a digital recording medium M. At this time, subject information H0 such as e-mail addresses representing the subject is sent from a terminal 1 such as a mobile terminal owned by the subject to the digital camera 2. The digital camera 2 relates the subject information H0 to the image data S0 and stores in the digital recording medium M. The image data S0 and the subject information H0 are read from the digital recording medium M, and the image data S0 are distributed to an image server 31, a personal computer 32 and/or the terminal 1, based on the subject information H0.

## Description

### BACKGROUND OF THE INVENTION

### Field of the Invention

The present invention relates to an image recording method, an image recording apparatus, an image distribution method, and an image distribution apparatus for recording a subject image photographed by a digital still camera, a digital camcorder, or an APS camera in a recording medium such as a memory card or an APS film and for distributing the subject image. The present invention also relates to programs that cause a computer to execute the image recording method and the image distribution method.

### Description of the Related Art

Prints of an image including people photographed with a digital camera or a silver-salt film camera have been distributed to the people photographed in the image, while image data obtained by a digital camera have been distributed to people photographed in an image represented by the image data, by being attached to e-mail messages or recorded in recording media such as memory cards or CD-Rs.

However, in the case of distribution of prints, people in each image need to be confirmed first, and additional prints are then generated for all the people. Furthermore, classification of the additional prints is necessary according to the people. In the case of distribution by attachment to e-mail messages or by recording in recording media such as CD-Rs, image data sets need to be classified according to people to receive the image data sets. In this manner, image distribution has been troublesome.

In the case of distributing image data sets as attachment to e-mail messages, if the number of the image data sets is large, it is difficult to distribute all the image data sets obtained by photography, due to communication cost or a communication load. In such a case, only a portion of the image data sets may be selected and distributed. However, a result of selection does not reflect the intentions of the people to receive the image data sets. Therefore, the image data sets may not be desired for some of the people.

In the case where photography is carried out by using a fixed camera installed in a theme park or the like, distribution of the image to people as the subject of the image has been difficult.

Furthermore, in the case where a plurality of people have respective imaging devices, it is difficult to understand which of the people photographed which scenes. Therefore, obtaining images as desired may be difficult.

### SUMMARY OF THE INVENTION

The present invention has been conceived based on consideration of the above circumstances. An object of the present invention is therefore to provide an image recording method, an image recording apparatus, an image distribution method, and an image distribution apparatus that enable easy image distribution. The present invention also aims at providing programs that cause a computer to execute the image recording method and the image distribution apparatus.

An image recording method of the present invention is appropriate when a subject of photography is people, and the image recording method comprises the steps of:
obtaining a subject image by photographing the subject;
receiving an input of subject information regarding the subject; and
recording the subject image in relation to the subject information in a recording medium.

The subject information refers to the name, the address, the phone number, and/or an e-mail address of each member of the people, and/or the IP address (hereinafter referred to as the address) of an image server for collectively managing image data representing the subject image. The subject information may also be the identification (such as the ID, the password, the phone number, the device number, or the address used for communication) of a terminal such as a mobile terminal (an imaging device like a camera, a mobile phone, a mobile PC [Personal Computer] or PDA [Personal Digital Assistant] carried by the subject), a recording medium having a function of communication, and a transceiver for dedicatedly transmitting the image data. The subject information may further include information representing an image reception environment, such as free space information and/or a data size that can be recorded, regarding a memory to which the subject image is sent.

The recording medium may be a digital recording medium such as a memory card, or a silver-salt film such as an APS film that can record the subject image as a latent image and has a magnetic recording area for magnetically recording the subject information.

Recording the subject image in relation to the subject information in a recording medium refers to recording the subject information in a header of the image data, or recording the subject information while being unified with the image data if the recording medium is a digital recording medium. In the case of a silver-salt film such as an APS film as the recording medium, the subject information is recorded in a magnetic recording area corresponding to the frame of the subject image.

In the image recording method of the present invention, it is preferable for the image data representing the subject image to be distributed based on the subject information.

Distributing the image data representing the subject image based on the subject information refers to sending the image data via a public telecommunication line or a dedicated line to addressees identified by the subject information. More specifically, in the case where the subject information includes the e-mail addresses and/or the image server address described above, the image data are sent to the respective addressees by being attached to e-mail messages. In the case where the subject information is the name, the address, the phone number, and/or the ID of the subject, the image data are sent to e-mail addresses and/or the image server address after a database that relates the e-mail addresses and/or the image server address to the above-described subject information is referred to.

In the image recording method of the present invention, it is preferable for the image data to be sent together with distribution information representing the addressees that are determined by the subject information regarding the image data.

The distribution information is information representing the addressees of the image data, and enables confirmation of to whom the image data have been sent.

In the image recording method of the present invention, different-size image data whose data size is different from that of the image data are preferably generated so that the different-size image data can be sent according to the processing capability of each of the addressees.

The processing capability of each of the addressees refers to the free space of memory, a data size that can be recorded, and/or a communication speed regarding each of the addressees.

In the image recording method of the present invention, it is preferable for the addressees to be output from a printer or on a monitor, based on the subject information.

In the case where the subject image has been recorded on a silver-salt film such as an APS film, prints are generated from the film. Furthermore, the image data obtained by a digital camera are printed or recorded in digital recording media in some cases. In such cases, it is preferable for the addressees to be determined based on the subject information, regarding the subject image that is printed or recorded in the digital recording media.

In the image recording method of the present invention, it is preferable for the subject information to be input by receiving the subject information sent from the terminal.

As the terminal, a mobile terminal such as a mobile phone, a mobile PC or PDA, an imaging device such as a digital camera having a communication function or an APS camera, a recording medium having a function of communication, or a transceiver dedicated to transmission of the subject information and reception of the image data can be used, for example.

In the image recording method of the present invention, it is also preferable for the subject information to be input from input means such as ten keys.

An image distribution method of the present invention comprises the step of sending image data representing a subject image obtained by photography, according to subject information representing a subject included in the subject image.

In the image distribution method of the present invention, it is preferable for the image data to be distributed together with distribution information representing addressees that are determined by the subject information regarding the image data.

In the image distribution method of the present invention, different-size image data whose data size is different from that of the image data may be generated so that the different-size image data can be sent according to the processing capability of each of the addressees.

An image recording apparatus of the present invention comprises:
imaging means for obtaining a subject image by photographing a subject;
subject information input reception means for receiving an input of subject information regarding the subject; and
recording means for recording the subject image in relation to the subject information in a recording medium.

It is preferable for the image recording apparatus of the present invention to further comprise distribution means for distributing image data representing the subject image, based on the subject information.

Furthermore, in the image recording apparatus of the present invention, it is preferable for the distribution means to distribute the image data together with distribution information representing addressees that are determined according to the subject information regarding the image data.

The image recording apparatus of the present invention may further comprise image generation means for generating different-size image data whose data size is different from that of the image data so that the distribution means can distribute the different-size image data according to the processing capability of each of the addressees.

It is also preferable for the image recording apparatus of the present invention to further comprise output means for outputting the addressees of the subject image, based on the subject information.

The subject information input reception means of the image recording apparatus of the present invention preferably carries out reception of the subject information input by receiving the subject information sent from a terminal.

The subject information input reception means of the image recording apparatus of the present invention may also carry out reception of the subject information input by receiving the input of the subject information from input means.

An image distribution apparatus of the present invention comprises distribution means for distributing image data representing a subject image obtained by photography, according to subject information regarding a subject included in the subject image.

In the image distribution apparatus of the present invention, the distribution means preferably distributes the image data together with distribution information representing addressees that are determined according to the subject information regarding the image data.

The image distribution apparatus of the present invention may further comprise image data generation means for generating different-size image data whose data size is different from that of the image data. In this case, the distribution means distributes the different-size image data according to the processing capability of each of the addressees.

The image recording method and the image distribution method of the present invention may be provided as programs that cause a computer to execute the methods.

According to the present invention, the subject information is recorded in a recording medium by being related to the subject image. Therefore, to whom the subject image needs to be distributed can be recognized easily by simply referring to the subject information. Furthermore, since the subject information enables easy classification of a plurality of subject images, the subject images can be distributed easily. In the case where a member of the people included in the subject image wishes to have the subject image, the subject information input regarding the person is received at the time of photography. In this manner, the person can obtain the subject image as desired and without fail.

By distributing the subject information together with the subject image, each member of the people who received the subject image can understand to whom the subject image has been distributed. Therefore, the people can exchange comments or the like by contacting each other.

By distributing the different-size image data instead of the image data according to the processing capability of each of the addressees in the case where the size of the image data is large, the different-size image data can be securely recorded in a memory even if the processing capability is not high. Furthermore, the communication time therefor can be prevented from becoming long. In this manner, image data distribution can be carried out efficiently.

In the case where the addressees of the subject image is printed or output on a monitor according the subject information, the addressees can be confirmed easily when the subject image is printed or the image data representing the subject image are recorded in digital recording media such as CD-Rs. In this manner, the subject image can be distributed efficiently.

By receiving the subject information from the terminal, the subject information can be input easily.

Furthermore, by receiving the subject information from input means such as ten keys, the subject information can be received even in the case where the terminal is not available.

### BRIEF DESCRIPTION OF THE DRAWINGS

Figure 1 is a block diagram showing a configuration of a first embodiment of an image output system adopting an image recording apparatus of the present invention;
Figure 2 is a flow chart showing the operation of the image output system in the first embodiment;
Figure 3 is a block diagram showing a configuration of a second embodiment of an image output system adopting an image recording apparatus of the present invention;
Figure 4 is a block diagram showing a configuration of a third embodiment of an image output system adopting an image recording apparatus of the present invention;
Figure 5 is a flow chart showing the operation of the image output system in the third embodiment;
Figure 6 is a block diagram showing a configuration of a fourth embodiment of an image output system adopting an image recording apparatus of the present invention;
Figure 7 is a block diagram showing a configuration of a fifth embodiment of an image output system adopting an image recording apparatus of the present invention;
Figure 8 is a flow chart showing the operation of the image output system in the fifth embodiment; and
Figure 9 is a block diagram showing a configuration of a sixth embodiment of an image output system adopting an image recording apparatus of the present invention.

### DESCRIPTION OF THE PREFERRED EMBODIMENTS

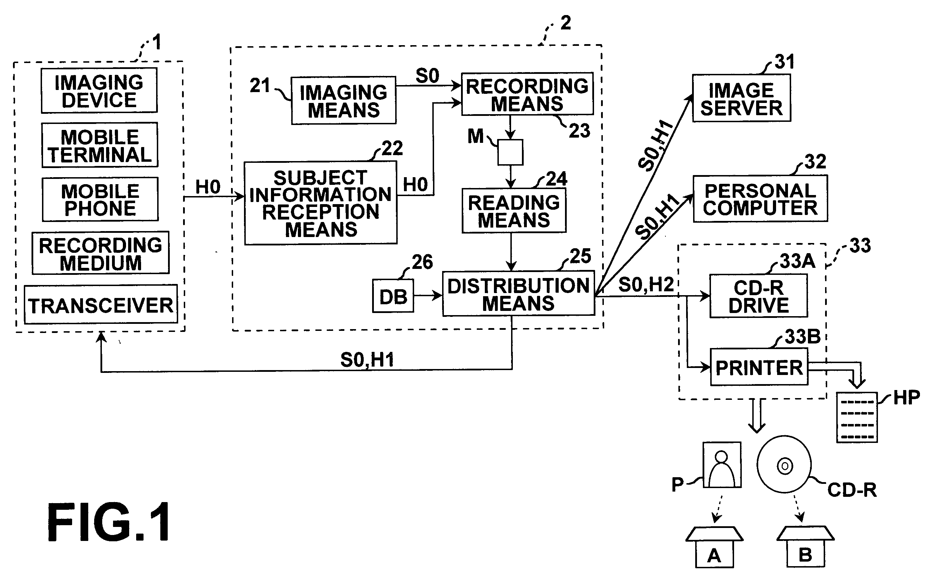

Hereinafter, embodiments of the present invention will be explained with reference to the accompanying drawings. Figure 1 is a block diagram showing a configuration of a first embodiment of an image output system adopting an image recording apparatus of the present invention. As shown in Figure 1, the image output system in the first embodiment of the present invention comprises a digital camera 2 and a terminal 1 that is owned by each member of people as a photography subject and has a function of sending subject information H0 regarding the person. An image data set or image data sets S0 (hereinafter referred to as the image data sets S0) obtained by photographing the subject with the digital camera 2 are distributed to an image server 31, a personal computer 32, a laboratory 33, and/or the terminal 1.

The terminal 1 refers to an imaging device such as a digital camera or a camcorder having a communication function, a mobile terminal such as a mobile PC or a PDA, a mobile phone, a recording medium such as a memory card having a communication function, or a transceiver for dedicatedly sending the subject information H0 and receiving the image data sets S0.

The digital camera 2 comprises imaging means 21 for obtaining the image data sets S0 by photographing the people as the subject, subject information reception means 22 for receiving the subject information H0 sent from the terminal 1, recording means 23 for recording the subject information H0 in relation to the image data sets S0 in a digital recording medium M such as a memory card, reading means 24 for reading the image data sets S0 and the subject information H0 from the digital recording medium M, distribution means 25 for distributing the image data sets S0 according to the subject information H0, and a database 26 for storing the subject information H0 in relation to an e-mail address, an image server address, or the address of each of addressees.

The subject information H0 refers to the name, the address, the phone number and/or the e-mail address of each member of the subject, the address of the image server that collectively manages the image data sets S0, and/or the identification of the terminal 1 (such as the ID, the password, the phone number, the device number, or the address used for communication). Furthermore, the subject information H0 may further include information representing an image reception environment of each of the addressees, such as the free space in a memory and/or a size of data that can be recorded, for example.

In the case where the subject information is the e-mail address or the image server address, the image data sets can be distributed to the e-mail address or the image server address, with reference to the subject information H0. Meanwhile, in the case where the subject information H0 is the name, the address, the phone number, or the terminal ID of each member of the subject, the e-mail address or the image server address is obtained from the database 26 according to the subject information H0, and the image data sets S0 can be distributed to the e-mail address or the image server address.

The distribution means 25 in this embodiment distributes the image data sets S0 together with distribution information H1 representing to whom the image data sets S0 are distributed.

After distribution of the image data sets S0, thumbnail image data sets representing thumbnail images of the images represented by the image data sets S0 may be recorded in the digital recording medium M, together with the distribution information H1. In this case, the image data sets S0 and the subject information H0 can be deleted from the recording medium M. In this manner, the free space of the recording medium M can be saved, and more images can be photographed and recorded therein.

The recording means 23 records the subject information H0 in a file header of each of the image data sets S0. Alternatively, the subject information H0 may be recorded by being unified with the image data sets S0

The laboratory 33 comprises a CD-R drive 33A for writing the image data sets S0 in CD-Rs, and a printer 33B for printing the image data sets S0 and address information H2 that will be explained later. Prints P or CD-Rs generated in the laboratory 33 are classified and delivered to the addressees, according to a print HP generated by printing the address information H2. The prints P or the CD-Rs may be provided to an agent visiting the laboratory 33 for the addressees. The address information H2 maybe displayed on a monitor (not shown), instead of being printed.

In the case where the laboratory 33 generates the prints P or the CD-Rs, the digital camera 2 sets the laboratory 33 as the addressee in the subject information H0 regarding the image data sets S0. Alternatively, the laboratory 33 may be included in the addressees, together with the image server 31, the personal computer 32, and/or the terminal 1. In this case, the laboratory 33 needs address information for delivery of the prints P or the CD-Rs. Therefore, the distribution means 25 searches the database 26 for the address information according to the subject information H0, and sends the address information as the address information H2 to the laboratory 33.

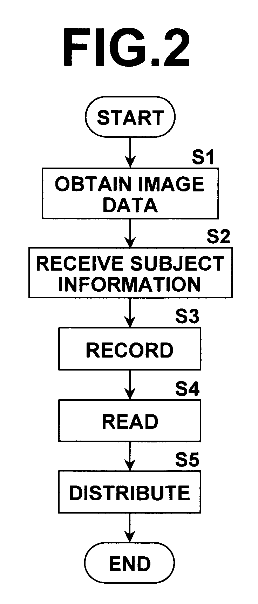

The operation of the first embodiment will be explained next. Figure 2 is a flow chart showing the operation of the first embodiment. The image data sets S0 are obtained by photographing the subject (Step S1). At the same time, the subject information H0 is sent from the terminal 1 owned by the subject to the digital camera 2, and the subject information reception means 22 receives the subject information H0 (Step S2). The recording means 23 records the image data sets S0 and the subject information H0 in the digital recording medium M (Step S3). In the case where the subject image that has been photographed is not necessary, the subject information H0 is not sent. The reading means 24 reads the image data sets S0 and the subject information H0 from the digital recording medium M (Step S4). In the case where the number of the image data sets S0 in the digital recording medium M is not one, the image data sets S0 are classified according to the subject information H0. The distribution means 25 distributes the image data sets S0 to the image server 31, the personal computer 32, and/or to the terminal 1, according to the subject information H0 while sending the image data sets S0 and the address information H2 to the laboratory 33 (Step S5) to end the operation.

In the case where the image data sets S0 and the address information H2 are sent to the laboratory 33, the prints P or the CD-Rs are generated from the image data sets S0, and the address information H2 is printed as the print HP. The prints P or the CD-Rs are classified according to the print HP, and delivered to the addresses based on the address information H2.

The image data sets S0 sent to the image server 31 can be downloaded via a network. Therefore, by accessing the image server 31, the image data sets S0 can be displayed on a personal computer or the like, after downloading.

As has been described above, according to the first embodiment of the present invention, the subject information H0 is related to the image data sets S0, and recorded in the digital recording medium M together with the image data sets S0. Therefore, the addressees of the image data sets S0 related to the subject information H0 can be easily understood by simply referring to the subject information H0. Furthermore, the image data sets S0 can be classified according to the subject information H0. In this manner, the image data sets S0 can be distributed easily. In the case where a member of the group of people included in the subject images wishes to have the image data sets S0 of the subject images, the person can receive the image data sets S0 with certainty, by inputting the subject information H0 from the terminal 1 to the digital camera 2.

Distributing the distribution information H1 together with the image data sets S0 enables understanding of to whom the image data sets S0 have been sent. Therefore, comments or the like on the images represented by the image data sets S0 can be exchanged between the addressees.

Since the subject information H0 is input through transmission from the terminal 1 to the digital camera 2, the subject information can be input easily.

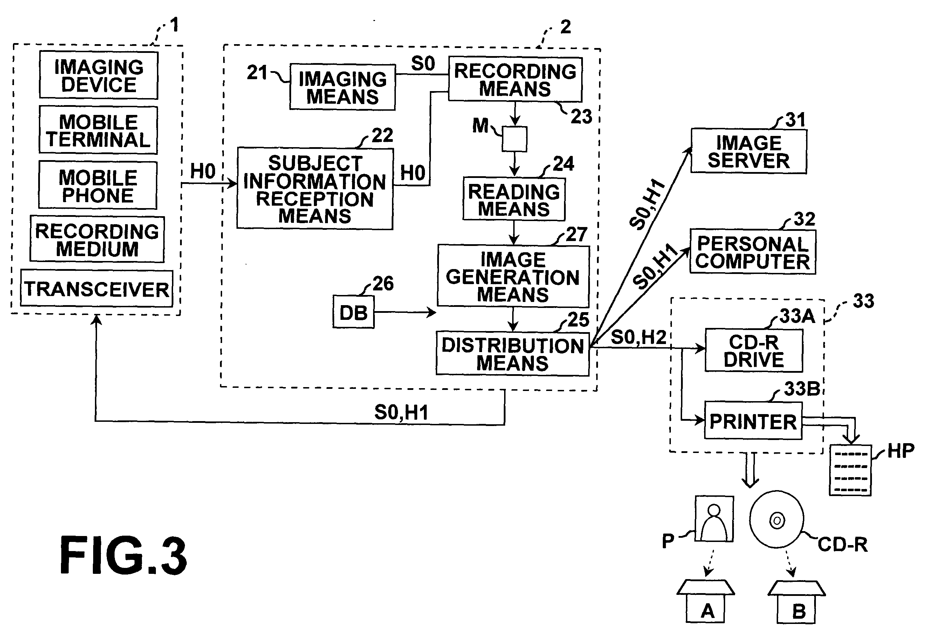

In the first embodiment described above, the image data sets S0 obtained by the imaging means 21 are sent from the distribution means 25 as they are. However, as shown by a second embodiment in Figure 3, the image output system may further comprise image generation means 27 for generating different-size image data sets (such as low-resolution image data sets or thumbnail image data sets) whose data size is different from that of the image data sets S0, from the image data sets S0. In this case, the different-size image data sets are sent according to the processing capability (such as the memory space, a data size that can be recorded, or a communication speed) of each of the addressees included in the subject information H0.

By distributing the image data sets of different size in accordance with the processing capability of each of the addressees in the case where the size of the image data is large, the different-size image data sets can be securely recorded in a memory even if the processing capability is not high. Furthermore, the communication time can be prevented from becoming long. In this manner, image data distribution can be carried out efficiently.

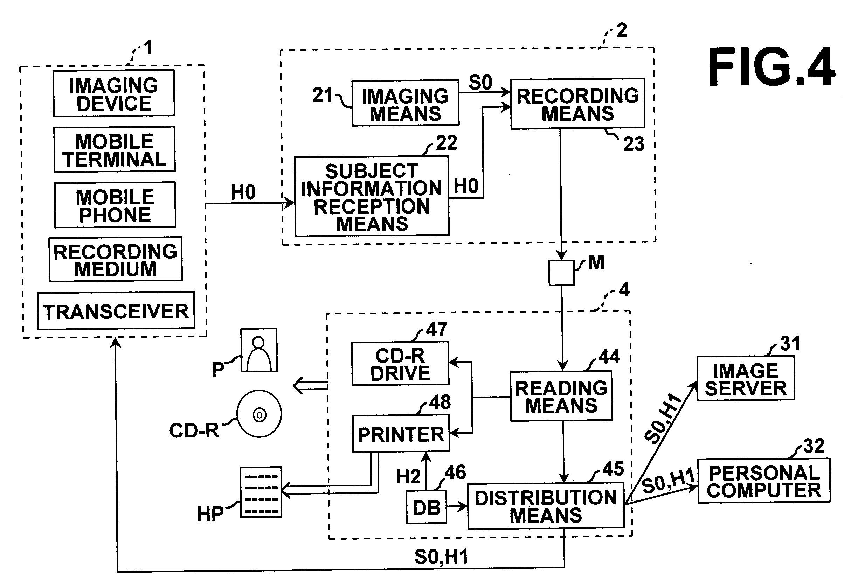

A third embodiment of the present invention will be explained next. Figure 4 is a block diagram showing a configuration of the third embodiment of an image output system adopting an image recording apparatus of the present invention. In the third embodiment, the same elements as in the first embodiment have the same reference numbers, and detailed explanations thereof are omitted. In the third embodiment, a digital camera 2 comprises imaging means 21, subject information reception means 22, and recording means 23. A digital recording medium M having image data sets S0 and subject information H0 recorded therein is brought to a laboratory 4, and the image data sets S0 are distributed by the laboratory 4.

For this purpose, the laboratory 4 comprises reading means 44, distribution means 45, and a database 46 respectively having the functions of the reading means 24, the distribution means 25, and the database 26 of the first embodiment. The laboratory 4 further comprises a CD-R drive 47 and a printer 48, as the laboratory 3 in the first embodiment.

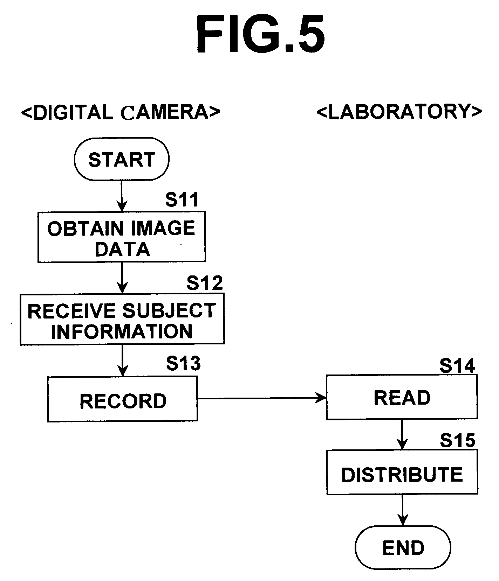

The operation of the third embodiment will be explained next. Figure 5 is a flow chart showing the operation of the third embodiment. The image data sets S0 are obtained by photographing a subject (Step S11). At the same time, the subject information H0 is sent from a terminal 1 owned by the subject to the digital camera 2, and the subject information reception means 22 receives the subject information H0 (Step S12). The recording means 23 records the image data sets S0 and the subject information H0 in the digital recording medium M (Step S13). The procedures described above are carried out by the digital camera 2. The digital recording medium M is brought to the laboratory 4.

The reading means 44 of the laboratory 4 that received the digital recording medium M reads the image data sets S0 and the subject information H0 from the digital recording medium M (Step S14). In the case where the number of the image data sets S0 in the digital recording medium M is not one, the image data sets S0 are classified according to the subject information H0. The distribution means 45 distributes the image data sets S0 to an image server 31, a personal computer 32, and/or to the terminal 1 according to the subject information H0 (Step S15) to end the operation.

In the case where the image data sets S0 are printed or written in CD-Rs, prints P or CD-Rs are generated from the image data sets S0. The database 46 is searched for address information H2 according to the subject information H0, and the address information H2 is printed as a print HP. Based on the print HP, the prints P or the CD-Rs are classified and delivered to addressees based on the address information H2.

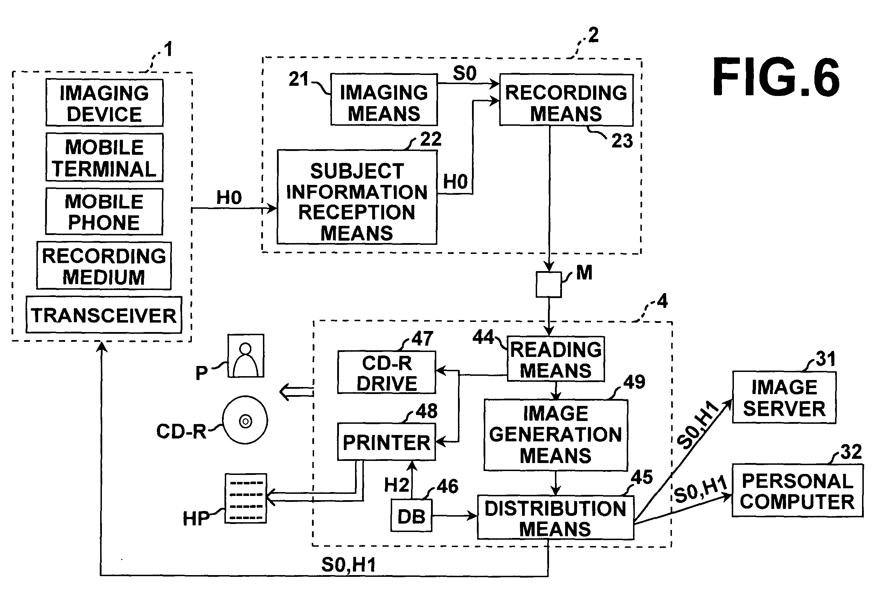

In the third embodiment described above, the image data sets S0 obtained by the imaging means 21 are distributed directly from the distribution means 45. However, as shown by a fourth embodiment of an image output system in Figure 6, the image output system may further comprise image generation means 49 for generating different-size image data sets (such as low-resolution image data sets or thumbnail image data sets) whose data size is different from that of the image data sets S0. Depending on the processing capability of each of addressees represented by the subject information H0, the different-size image data sets may be sent instead of the image data.

In the second to fourth embodiments described above, in the case where the image data sets S0 are sent to the image server 31, the image data sets S0 may be deleted from the digital recording medium M while the subject information H0 is kept therein, in order to save space of the recording medium M. The owner of the digital camera 2 can understand to whom the image data sets have been sent and can view the image data sets, as long as the subject information H0 exists in the recording medium M. In this case, it is preferable that the thumbnail image data sets are generated from the image data sets S0, and recorded in the digital recording medium M.

In the first to fourth embodiments described above, the subject is photographed with use of the digital camera 2. However, a fixed camera installed in a theme park or the like may have the same functions as the digital camera 2. In the case where photography is carried out by using a fixed camera, distribution of an image to people as a subject has been difficult. However, by applying the present invention to such a camera, the image, that is, the image data set S0, can be sent easily to the people as the subject.

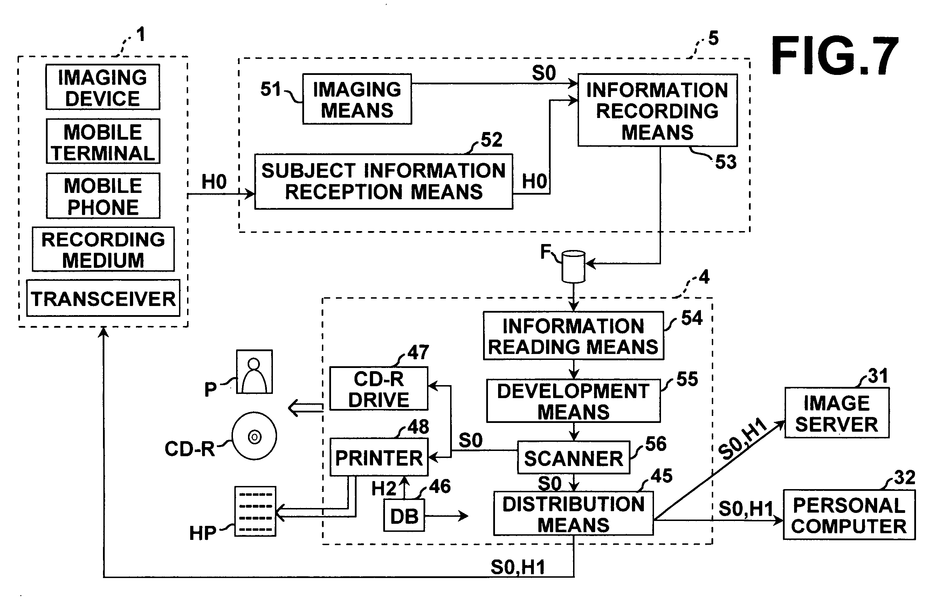

In the above embodiments, the subject is photographed by using the digital camera 2. However, a subject may be photographed with an APS camera that uses an APS film enabling magnetic information recording. Hereinafter, an embodiment using such an APS camera will be explained as a fifth embodiment of the present invention. Figure 7 is a block diagram showing a configuration of the fifth embodiment of an image output system of the present invention. In the fifth embodiment, the same elements as in the third embodiment have the same reference numbers, and detailed explanations thereof are omitted. As shown in Figure 7, in the image output system in the fifth embodiment, a subject is photographed with an APS camera 5 and a film cartridge F storing an APS film recorded with an image or images of the subject (hereinafter referred to as the subject images) is brought to a laboratory 4. The laboratory 4 then sends image data sets S0, or delivers prints P or CD-Rs.

The APS camera 5 comprises imaging means 51 having a shutter and an optical system that records the subject images on the film, subject information reception means 52 for receiving subject information H0 sent from a terminal 1 owned by the subject, and information recording means 53 for recording the subject information H0 in a magnetic recording area of the APS film.

The laboratory 4 comprises information reading means 54 for reading the subject information H0 recorded in the magnetic recording area of the APS film, development means 55 for developing the APS film, a scanner 56 for obtaining the image data sets S0 representing the subject images by reading the subject images recorded on the APS film, distribution means 45, a database 46, a CD-R drive 47, and a printer 48.

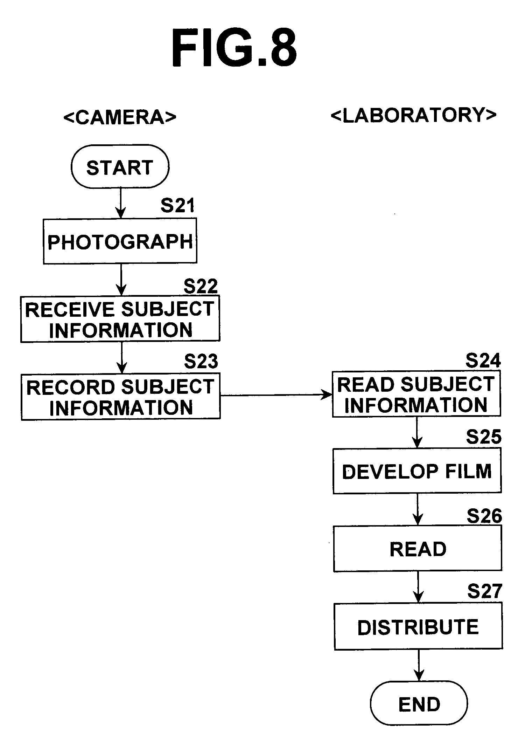

The operation of the fifth embodiment will be explained next. Figure 8 is a flow chart showing the operation of the fifth embodiment. The subject is photographed, and the subject images are recorded on the APS film as latent images (Step S21). At the same time, the subject information H0 is sent from the terminal 1 owned by the subject to the APS camera 5, and received by the subject information reception means 52 (Step S22). The information recording means 53 records the subject information H0 in the magnetic recording area of the APS film (Step S23). The procedures described above are carried out by the APS camera 5. The film cartridge F containing the APS film recorded with the subject images is brought to the laboratory 4.

In the laboratory 4 that received the film cartridge F, the information reading means 54 reads the subject information H0 recorded in the magnetic recording area of the APS film (Step S24). The development means 55 develops the APS film (Step S25), and the scanner 56 reads the subject images recorded on the developed APS film to obtain the image data sets S0 representing the subject images (Step S26). In the case where the number of the subject images recorded on the APS film is not one, the image data sets S0 are classified according to the subject information H0. The distribution means 45 distributes the image data sets S0 to an image server 31, a personal computer 32, and/or to the terminal 1, based on the subject information H0 (Step S27) to end the operation.

In the case where the image data sets S0 are printed or written in CD-Rs, prints P or CD-Rs are generated from the image data sets S0. The database 46 is searched for address information H2 according to the subject information H0, and the address information H2 is printed as a print HP. Based on the print HP, the prints P or the CD-Rs are classified and delivered to addressees based on the address information H2.

In the fifth embodiment described above, the image data sets S0 obtained by the scanner 56 are distributed as they are, by the distribution means 45. However, as in the fourth embodiment, the image output system may further comprise image generation means for generating, from the image data sets S0, different-size image data sets (such as low-resolution image data sets or thumbnail image data sets) whose data size is different from that of the image data sets S0. Depending on the processing capability (such as the memory space, a data size that can be recorded, or a communication speed) of each of the addressees included in the subject information H0, the different-size image data sets may be sent, instead of the image data sets S0.

In the fifth embodiment, the prints P are generated from the image data sets S0 obtained by reading the APS film. However, the prints P may be generated according to so-called analog printing in which a photosensitive material is exposed to light passing through the developed film.

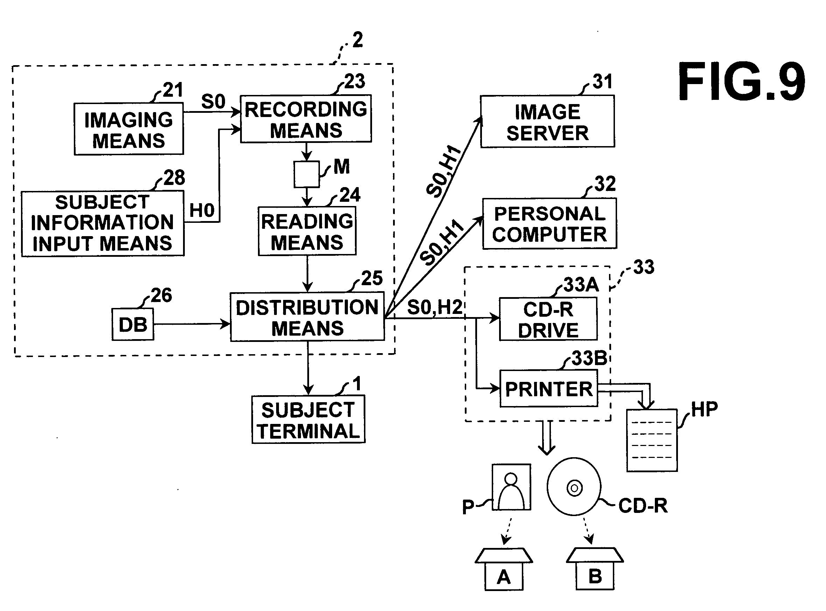

In the first to fifth embodiments described above, the subject information H0 is sent from the terminal 1 to the subject information reception means 22 or 52 of the digital camera 2 or the APS camera 5. In this manner, the subject information H0 is input. However, as shown by a sixth embodiment in Figure 9, a digital camera 2 may comprise subject information input means 28 such as ten keys for manually inputting subject information H0 to the digital camera 2. Figure 9 shows the case of the subject information input means 28 comprising the digital camera 2 of the first embodiment. However, in the second to fifth embodiments, the subject information input means 28 may also be used, instead of the subject information reception means 22 or 52.

By using the subject information input means 28, the subject information H0 can be input, regarding a member in the subject who does not have the terminal 1.

A skilled artisan would know that computer readable media are not limited to any specific type of storage device and include any kind of device, including but not limited to CDs, floppy discs, RAMs, ROMs, hard discs, magnetic tapes, and internet downloads, in which computer instructions can be stored and/or transmitted. Transmission of the computer code through a network or through wireless transmission means is also within the scope of this invention. Additionally, computer code/instructions include, but are not limited to, source, object, and executable code and can be in any language including higher level languages, assembly language and machine language.

## Claims

1. An image recording method comprising the steps of:
obtaining a subject image by photographing a subject;
receiving an input of subject information regarding the subject; and
recording the subject image in relation to the subject information in a recording medium.

2. An image recording method as defined in Claim 1, further comprising the step of distributing image data representing the subject image, based on the subject information.

3. An image recording method as defined in Claim 2, further comprising the step of distributing distribution information representing addressees of the image data together with the image data, the addressees being determined according to the subject information.

4. An image recording method as defined in Claim 2, further comprising the step of:
generating different-size image data having the data size that is different from the data size of the image data; wherein
the step of distributing the image data is the step of distributing the different-size image data instead of the image data in accordance with a processing capability of each of addressees of the image data, the addressees being determined according to the subject information.

5. An image recording method as defined in Claim 3, further comprising the step of:
generating different-size image data having the data size that is different from the data size of the image data; wherein
the step of distributing the image data is the step of distributing the different-size image data instead of the image data, in accordance with a processing capability of each of the addressees.

6. An image recording method as defined in Claim 1, further comprising the step of outputting addressees of the subject image, based on the subject information.

7. An image recording method as defined in Claim 1, wherein the step of receiving the input of the subject information is the step of receiving the subject information sent from a terminal carried by the subject.

8. An image recording method as defined in Claim 1, wherein the step of receiving the input of the subject information is the step of receiving the input from input means.

9. An image distribution method comprising the step of distributing image data representing a subject image obtained by photography, according to subject information representing a subject included in the subject image.

10. An image distribution method as defined in Claim 9, further comprising the step of distributing distribution information representing addressees of the image data together with the image data, the addressees being determined according to the subject information.

11. An image distribution method as defined in Claim 9, further comprising the step of:
generating different-size image data having the data size that is different from the data size of the image data, wherein
the step of distributing the image data is the step of distributing the different-size image data instead of the image data according to a processing capability of each of addressees of the image data, the addressees being determined according to the subject information.

12. An image distribution method as defined in Claim 10, further comprising the step of:
generating different-size image data having the data size that is different from the data size of the image data, wherein
the step of distributing the image data is the step of distributing the different-size image data instead of the image data, according to a processing capability of each of the addressees of the image data.

13. An image recording apparatus comprising:
imaging means for obtaining a subject image by photographing a subject;
subject information input reception means for receiving an input of subject information regarding the subject; and
recording means for recording the subject image in relation to the subject information in a recording medium.

14. An image recording apparatus as defined in Claim 13, further comprising distribution means for distributing image data representing the subject image, based on the subject information.

15. An image recording apparatus as defined in Claim 14, wherein the distribution means distributes distribution information representing addressees of the image data together with the image data, the addressees being determined according to the subject information.

16. An image recording apparatus as defined in Claim 14, further comprising image generation means for generating different-size image data having the data size that is different from the data size of the image data, wherein
the distribution means distributes the different-size image data instead of the image data according to a processing capability of each of addressees of the image data, the addressees being determined according to the subject information.

17. An image recording apparatus as defined in Claim 15, further comprising image generation means for generating different-size image data having the data size that is different from the data size of the image data, wherein
the distribution means distributes the different-size image data instead of the image data, according to a processing capability of each of the addressees of the image data.

18. An image recording apparatus as defined in Claim 13, further comprising output means for outputting addressees of the subject image, based on the subject information.

19. An image recording apparatus as defined in Claim 13, wherein the subject information input reception means carries out reception of the subject information input by receiving the subject information sent from a terminal carried by the subject.

20. An image recording apparatus as defined in Claim 13, wherein the subject information input reception means carries out reception of the subject information input by receiving the input from input means.

21. An image distribution apparatus comprising distribution means for distributing image data representing a subject image obtained by photography, according to subject information regarding a subject included in the subject image.

22. An image distribution apparatus as defined in Claim 21, wherein the distribution means distributes distribution information representing addressees of the image data together with the image data, the addressees being determined according to the subject information.

23. An image distribution apparatus as defined in Claim 21, further comprising image data generation means for generating different-size image data having the data size that is different from the data size of the image data, wherein
the distribution means distributes the different-size image data instead of the image data according to a processing capability of each of addressees of the image data, the addressees being determined according to the subject information.

24. An image distribution apparatus as defined in Claim 22, further comprising image data generation means for generating different-size image data having the data size that is different from the data size of the image data, wherein
the distribution means distributes the different-size image data instead of the image data, according to a processing capability of each of the addressees of the image data.

25. A program that causes a computer to execute the steps of:
obtaining a subject image by photographing a subject;
receiving an input of subject information regarding the subject; and
recording the subject image in relation to the subject information in a recording medium.

26. A program as defined in Claim 25, further comprising the step of distributing image data representing the subject image, based on the subject information.

27. A program as defined in Claim 26, further comprising the step of distributing distribution information representing addressees of the image data together with the image data, the addressees being determined according to the subject information.

28. A program as defined in Claim 26, further comprising the step of:
generating different-size image data having the data size that is different from the data size of the image data; wherein
the step of distributing the image data is the step of distributing the different-size image data instead of the image data in accordance with a processing capability of each of addressees of the image data, the addressees being determined according to the subject information.

29. A program as defined in Claim 27, further comprising the step of:
generating different-size image data having the data size that is different from the data size of the image data; wherein
the step of distributing the image data is the step of distributing the different-size image data instead of the image data, in accordance with a processing capability of each of the addressees.

30. A program as defined in Claim 25, further comprising the step of outputting addressees of the subject image, based on the subject information.

31. A program as defined in Claim 25, wherein the step of receiving the input of the subject information is the step of receiving the subject information sent from a terminal carried by the subject.

32. A program as defined in Claim 25, wherein the step of receiving the input of the subject information is the step of receiving the input from input means.

33. A program that causes a computer to execute the step of distributing image data representing a subject image obtained by photography, according to subject information representing a subject included in the subject image.

34. A program as defined in Claim 33, further comprising the step of distributing distribution information representing addressees of the image data together with the image data, the addressees being determined according to the subject information.

35. A program as defined in Claim 33, further comprising the step of:
generating different-size image data having the data size that is different from the data size of the image data, wherein
the step of distributing the image data is the step of distributing the different-size image data instead of the image data according to a processing capability of each of addressees of the image data, the addressees being determined according to the subject information.

36. A program as defined in Claim 34, further comprising the step of:
generating different-size image data having the data size that is different from the data size of the image data, wherein
the step of distributing the image data is the step of distributing the different-size image data instead of the image data, according to a processing capability of each of the addressees of the image data.

37. A computer-readable recording medium storing a program that causes a computer to execute the steps of:
obtaining a subject image by photographing a subject;
receiving an input of subject information regarding the subject; and
recording the subject image in relation to the subject information in a recording medium.

38. A computer-readable recording medium as defined in Claim 37, the program further comprising the step of distributing image data representing the subject image, based on the subject information.

39. A computer-readable recording medium as defined in Claim 38, the program further comprising the step of distributing distribution information representing addressees of the image data together with the image data, the addressees being determined according to the subject information.

40. A computer-readable recording medium as defined in Claim 38, the program further comprising the step of:
generating different-size image data having the data size that is different from the data size of the image data; wherein
the step of distributing the image data is the step of distributing the different-size image data instead of the image data in accordance with a processing capability of each of addressees of the image data, the addressees being determined according to the subject information.

41. A computer-readable recording medium as defined in Claim 39, the program further comprising the step of:
generating different-size image data having the data size that is different from the data size of the image data; wherein
the step of distributing the image data is the step of distributing the different-size image data instead of the image data, in accordance with a processing capability of each of the addressees.

42. A computer-readable recording medium as defined in Claim 37, the program further comprising the step of outputting addressees of the subject image, based on the subject information.

43. A computer-readable recording medium as defined in Claim 37, wherein the step of receiving the input of the subject information is the step of receiving the subject information sent from a terminal carried by the subject.

44. A computer-readable recording medium as defined in Claim 37, wherein the step of receiving the input of the subject information is the step of receiving the input from input means.

45. A computer-readable recording medium storing a program that causes a computer to execute the step of distributing image data representing a subject image obtained by photography, according to subject information representing a subject included in the subject image.

46. A computer-readable recording medium as defined in Claim 45, the program further comprising the step of distributing distribution information representing addressees of the image data together with the image data, the addressees being determined according to the subject information.

47. A computer-readable recoding medium as defined in Claim 45, the program further comprising the step of:
generating different-size image data having the data size that is different from the data size of the image data, wherein
the step of distributing the image data is the step of distributing the different-size image data instead of the image data according to a processing capability of each of addressees of the image data, the addressees being determined according to the subject information.

48. A computer-readable recording medium as defined in Claim 46, the program further comprising the step of:
generating different-size image data having the data size that is different from the data size of the image data, wherein
the step of distributing the image data is the step of distributing the different-size image data instead of the image data, according to a processing capability of each of the addressees of the image data.
